(19) Europäisches Patentamt
European Patent Office
Office européen des brevets

(11) **EP 2 086 257 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(51) Int Cl.:
***H04W 16/10*** ^(2009.01)

(21) Anmeldenummer: **09100064.6**

(22) Anmeldetag: **23.01.2009**

(54) **Verfahren zum dynamischen Zuweisen von Ressourcen an eine Vielzahl von Zellen eines zellularen Netzes**

Method for dynamic allocation of resources from a number of cells of a cellular network

Procédé d'attribution dynamique de ressources à une multitude de cellules d'un réseau cellulaire

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.01.2008 DE 102008006795**

(43) Veröffentlichungstag der Anmeldung:
**05.08.2009 Patentblatt 2009/32**

(73) Patentinhaber: **Deutsche Telekom AG**
**53113 Bonn (DE)**

(72) Erfinder:
• **Gaspard, Ingo**
**64372, Ober-Ramstadt (DE)**
• **Hasselbach, Philipp**
**35578 Wetzlar (DE)**
• **Klein, Anja**
**64287, Darmstadt (DE)**

(74) Vertreter: **Blumbach - Zinngrebe patentConsult**
**Postfach 6208**
**65052 Wiesbaden (DE)**

(56) Entgegenhaltungen:
**WO-A1-00/59251      US-A- 5 734 983**

• **KATZELA I ET AL: "Channel assignment schemes for cellular mobile telecommunication systems: A comprehensive survey", IEEE COMMUNICATIONS SURVEYS, IEEE, NEW YORK, NY, US, Bd. 11, Nr. 2, 1. April 2000 (2000-04-01), Seiten 10-31, XP011285356, ISSN: 1553-877X**
• **KI TAE KIM ET AL: "A Universal Frequency Reuse System in a Mobile Cellular Environment", I E E E V T S VEHICULAR TECHNOLOGY CONFERENCE. PROCEEDINGS, IEEE, US, 1. April 2007 (2007-04-01), Seiten 2855-2859, XP031093152, ISSN: 1550-2252 ISBN: 978-1-4244-0266-3**

**Beschreibung**

Die Erfindung betrifft ein Verfahren zum dynamischen Zuweisen von Ressourcen aus einer vorbestimmten Anzahl an verfügbaren Ressourcen an eine Vielzahl von Zellen eines zellularen Netzes, insbesondere eines zellularen Mobilfunknetzes.

In Mobilfunknetzen ist die Anzahl verfügbarer Ressourcen, die den Zellen des Mobilfunknetzes zugewiesen werden können, begrenzt. Bekannt ist es, dass durch Verwendung derselben Ressourcen, beispielsweise Frequenzen, in verschiedenen Zellen eine hohe Systemkapazität erzielt werden kann. Die Wiederverwendung von Ressourcen in verschiedenen Zellen führt jedoch zu Störungen zwischen diesen Zellen, die auch als Gleichkanalstörung bezeichnet wird. Die Ressourcen werden deshalb unter Berücksichtigung eines minimalen räumlichen Abstands, der Wiederverwendungsabstand genannt wird, den Zellen zugewiesen. Der Wiederverwendungsabstand ist der Abstand zwischen zwei Zellen, denen dieselben Ressourcen zugewiesen werden. Ein derartiger zellularer Netzaufbau wird beispielsweise von K. David et al. in dem Fachbuch "Digitale Mobilfunksysteme, B.G. Teubner Stuttgart, 1996, Seiten 94 bis 100" beschrieben.

Verfügbare Ressourcen können beispielsweise entsprechend einem statischen Kanalzuweisungsschema den Zellen zugewiesen werden, wie dies von I. Katzela et al. in dem Aufsatz "Channel Assignement Schemes for Cellular Mobile Telecommunication Systems: A Comprehensive Survey", IEEE Personal Communications, Vol. 3, Issue June 1996, pp. 10-31, beschrieben worden ist.

Aus WO 0059251 A1 sind beispielsweise ein System und ein Verfahren für die effiziente Zuweisung einer Vielzahl von Kanälen an eine Vielzahl von Knoten in einem FunkKommunikationssystem bekannt, wobei für jeden Knoten eine Pufferzone vorgesehen ist, und wobei den Mitgliedern der Pufferzone eines ausgewählten Knotens verboten ist, einen Kanal gleichzeitig mit dem ausgewählten Knoten zu verwenden. Ferner ist eine Co-Kanalzone für jeden Knoten vorgesehen, wobei die Co-Kanalzone eines bestimmten Knotens eine Untergruppe von Knoten umfasst, die sich innerhalb eines vorgegebenen Abstands zum bestimmten Konten befinden, aber keine Mitglieder der Pufferzone des bestimmten Knotens sind. Wenn für einen bestimmten Knoten eine Kanalzuweisung erfolgen soll, so wird der Kanal aus einer Untergruppe von Kanälen ausgewählt, welche diejenigen Kanäle nicht umfasst, die bereits den Knoten zugewiesen sind, die sich in der Pufferzone des bestimmten Knotens befinden, wobei der Kanal derart ausgewählt wird, dass eine mit der Co-Kanalzone verknüpfte Kostenfunktion minimiert wird.

Aus dem US Patent Nr. 6,002,934 ist ein Verfahren sowie eine Vorrichtung zur Zuweisung von Frequenzen an Zellen eines zellularen Netzwerks bekannt. Jede Zelle hat eine bestimmte Anzahl an Frequenzen angefordert. Das Verfahren umfasst folgende Schritte:

    a) Für jede Zelle wird ein Schwierigkeitsfaktor erzeugt, der einen relativen Schwierigkeitsgrad anzeigt, mit dem während eines ersten erfolglosen Zuweisungsversuch Frequenzen für die jeweilige Zelle ausgewählt werden können.

    b) Anschließend wird auf der Grundlage jedes Schwierigkeitsfaktors eine Zelle und eine Frequenz für diese Zelle ausgewählt.

    c) Soll der Zelle eine weitere Frequenz zugewiesen werden, werden die Schritte a) und b) wiederholt.

Der Erfindung liegt die Aufgabe zu Grunde, ein Verfahren zur dynamischen Zuweisung von Ressourcen an Zellen eines zellularen Netzes zur Verfügung zu stellen, welches sehr effizient arbeitet.

Ein Kerngedanke der Erfindung ist darin zu sehen, verfügbare Ressourcen Zellen eines zellularen Netzes in Abhängigkeit von der Anzahl aktuell angeforderter Ressourcen der jeweiligen Zellen zu zuweisen. Das Verfahren basiert auf einem nicht iterativen, regelbasierten Algorithmus, der eine sequentielle Zuweisung von Ressourcen zu Zellen oder Gruppen von Zellen ermöglicht. Das vorgeschlagene Verfahren kann eine linear wachsende Komplexität zeigen, welche unabhängig von der Gesamtanzahl an verfügbaren Ressourcen sein kann, so dass das Verfahren für eine autonome Echtzeitoptimierung der Ressourcenzuweisung eines zellularen Netzes angewandt werden kann. Das Verfahren beginnt die Zuweisung von Ressourcen in einem bestimmten Startpunkt innerhalb des zellularen Netzes, wobei der Startpunkt eine Zelle oder eine Gruppe von Zellen umfassen kann. Schrittweise erfolgt dann eine sequentielle Zuweisung von Ressourcen zu Zellen oder Gruppen von Zellen so lange, bis jeder Zelle des zellularen Netzes Ressourcen zugewiesen worden sind.

Das oben genannte technische Problem wird zum Einen durch die Verfahrensschritte des Anspruchs 1 gelöst.

Danach wird ein Verfahren zum dynamischen Zuweisen von Ressourcen aus einer vorbestimmten Anzahl verfügbarer Ressourcen an mehrere Zellen eines zellularen Netzes bereitgestellt. Das zellulare Netz kann ein zellulares Mobilfunknetz sein. Das Netz wird in Schritt a) in mehrere Zellengruppen unter Berücksichtigung eines vorbestimmten Wiederverwendungsabstands unterteilt, wobei die Zellen jeder Zellengruppe einen Abstand zueinander aufweisen, der kleiner als der vorbestimmte Wiederverwendungsabstand ist, und wobei sich die Zellengruppen teilweise überlappen. Teilweise überlappen bedeutet, dass verschiedene Zellengruppen wenigstens eine Zelle gemeinsam haben. Im folgenden wird eine solche Zellengruppe auch Nachbarschaftsgruppe genannt. In Schritt b) wird für jede Zelle die aktuelle Anzahl von angeforderten Ressourcen ermittelt. In Schritt c) wird wenigstens eine erste Zelle gemäß einer ersten Metrik ausgewählt. In Schritt d) werden Ressourcen der wenigstens einen ersten Zelle entsprechend der Anzahl von Ressourcen, die die jeweilige erste Zelle angefordert hat, zugewiesen, wobei die der jeweiligen ersten Zelle zuzuweisenden Ressourcen gemäß einer zweiten Metrik aus der vorbestimmten Anzahl an verfügbaren Ressourcen ausgewählt werden. In Schritt e) wird wenigstens eine weitere Zelle gemäß einer dritten Metrik ausgewählt. In Schritt f) werden Ressourcen der wenigstens einen weiteren Zelle entsprechend der Anzahl von Ressourcen, die die jeweilige weitere Zelle angefordert hat, zugewiesen, wobei die der jeweiligen weiteren Zelle zuzuweisenden Ressourcen gemäß der dritten Metrik aus der vorbestimmten Anzahl an verfügbaren Ressourcen ausgewählt werden. In Schritt g) werden die Schritte e) und f) solange wiederholt, bis allen Zellen des zellularen Netzes Ressourcen entsprechend der Anzahl von Ressourcen, die die jeweiligen weiteren Zellen angefordert haben, zugewiesen worden sind, wobei die Ressourcen derart zugewiesen werden, dass den Zellen jeder Zellengruppe verschiedene Ressourcen zugewiesen werden. Dank des Verfahrens kann sichergestellt werden, dass Ressourcen innerhalb einer Zellengruppe niemals mehrfach vergeben werden. Gleichzeitig können den in jedem Schritt ausgewählten Zellen eine optimale Anzahl angeforderter Ressourcen zugewiesen werden.

Vorteilhafte Weiterbildungen werden nachfolgend genannt.

Als erste Metrik kann eine Metrik angewendet werden, die bestimmt, dass in Schritt c) die wenigstens eine erste Zelle, welche die meisten oder wenigstens Ressourcen angefordert hat, ausgewählt wird.

Alternativ oder zusätzlich kann eine erste Metrik angewendet werden, die bestimmt, dass in Schritt c) die wenigstens eine erste Zelle zufällig ausgewählt wird.

Als dritte Metrik kann eine Metrik gewählt werden, die bestimmt, dass in Schritt e) die wenigstens eine weitere Zelle zufällig ausgewählt wird.

Alternativ oder zusätzlich kann als dritte Metrik eine Metrik angewandt werden, die bestimmt, dass in Schritt e) die wenigstens eine weitere Zelle ausgewählt wird, die die meisten oder wenigsten Ressourcen angefordert hat.

Alternativ oder zusätzlich kann als dritte Metrik eine Metrik gewählt werden, die bestimmt, das in Schritt e) die wenigstens eine weitere Zelle ausgewählt wird, die zu einer Zellengruppe gehört, deren Zellen die meisten oder wenigsten Ressourcen angefordert haben.

Alternativ oder zusätzlich kann als dritte Metrik eine Metrik angewendet werden, die bestimmt, dass in Schritt e) wenigstens eine weitere Zelle ausgewählt wird, die an wenigstens eine Zelle angrenzt, der bereits Ressourcen zugeordnet worden sind.

Eine effiziente Ausführungsform, bei der die Ressourcen in möglichst wenigen aufeinanderfolgenden Schritten den Zellen zugewiesen werden können sieht eine erste Metrik vor, die bestimmt, dass in Schritt c) die ersten Zellen ausgewählt werden, welche eine Zellengruppe bilden.

In diesem Fall kann die erste Metrik weiter bestimmen, dass in Schritt c) die ausgewählten ersten Zellen die meisten oder wenigsten Ressourcen angefordert haben.

Alternativ oder zusätzlich kann in Schritt c) die erste Metrik bestimmen, dass alle ersten Zellen ausgewählt werden, die jeweils die gleiche oder unterschiedliche Anzahl an Ressourcen angefordert haben.

Eine besondere Ausführungsform sieht vor, dass der Wiederverwendungsabstand $\sqrt{3N}$ R beträgt, wobei R der Radius einer Zelle ist und N die Anzahl an Zellen einer Zellengruppe ist. Die Zellen des zellularen Netzes werden dann entsprechend dem vorbestimmten Wiederverwendungsabstand in N Wiederverwendungsgruppen aufgeteilt. Jede Zelle einer Zellengruppe gehört zu einer anderen Wiederverwendungsgruppe. Jeder Wiederverwendungsgruppe wird eine vorbestimmte Anzahl an Ressourcen zugeordnet, wobei die Summe der den Wiederverwendungsgruppen zugeordneten Ressourcen die Anzahl verfügbarer Ressourcen nicht überschreitet. Die in Schritt c) ausgewählten ersten Zellen gehören zu einer Zellengruppe.

In Schritt d) werden jeder ersten Zelle der Zellengruppe so viele Ressourcen zugewiesen, wie die jeweilige erste Zelle angefordert hat, wobei jeder ersten Zelle unterschiedliche Ressourcen zugewiesen werden. In Schritt e) wird wenigstens eine weitere Zelle ausgewählt, die jeweils an wenigstens eine Zelle angrenzt, welcher bereits Ressourcen zugewiesen worden sind. In Schritt f) wird die wenigstens eine Zellengruppen ermittelt, zu der die wenigstens eine weitere Zelle gehört. Jeder weiteren Zelle werden so viele Ressourcen zugewiesen, wie die jeweilige weitere Zelle angefordert hat, wobei jeder weiteren Zelle andere Ressourcen als den übrigen Zellen der jeweiligen Zellengruppe zugewiesen werden. In Schritt g) werden die Schritte e) und f) wiederholt, bis allen Zellen des zellularen Netzes Ressourcen zugewiesen worden sind.

Ein optimiertes Verfahren sieht vor, dass in Schritt d) jeder ersten Zelle zuerst die Ressourcen zugewiesen werden, die der Wiederverwendungsgruppe, zu welcher die jeweilige erste Zelle gehört, zugeordnet sind, und, wenn weitere Ressourcen einer oder mehreren ersten Zellen zugewiesen werden sollen, die weiteren Ressourcen gemäß einer vierten Metrik aus wenigstens einer der anderen Wiederverwendungsgruppen ausgewählt werden, und dass

in Schritt f) jeder weiteren Zelle zuerst die Ressourcen zugewiesen werden, die der Wiederverwendungsgruppe, zu welcher die jeweilige weitere Zelle gehört, zugeordnet sind, und, wenn weitere Ressourcen einer oder mehreren weiteren Zellen zugewiesen werden sollen, die Ressourcen gemäß der vierten Metrik aus wenigstens einer der anderen Wiederverwendungsgruppen ausgewählt werden.

Bei einer vorteilhaften Ausführungsform beträgt der Wiederverwendungsabstand 3R. In diesem Fall werden die Zellen des zellularen Netzes in drei Wiederverwendungsgruppen aufgeteilt. In Schritt e) wird wenigstens eine weitere Zelle ausgewählt, die jeweils an zwei Zellen angrenzt, welchen bereits Ressourcen zugewiesen worden sind.

In vorteilhafter Weise werden in Schritt c) die ersten Zellen einer Zellengruppe ausgewählt, die jeweils eine Anzahl von Ressourcen angefordert haben, die nicht größer ist als die Anzahl an Ressourcen, welche der Wiederverwendungsgruppe, zu der die jeweilige erste Zelle gehört, zugeordnet worden ist.

Alternativ oder zusätzlich können in Schritt c) die ersten Zellen ausgewählt werden, welche die meisten oder wenigstens Ressourcen angefordert haben.

Um sich ändernde Ressourcenanforderungen in Echtzeit berücksichtigen zu können, wird für jede Zelle die aktuelle Anzahl angeforderter Ressourcen regelmäßig ermittelt, wobei Schritt c) erneut ausgeführt werden kann, bevor Schritt g) beendet worden ist.

Ein Vorteil dieses Verfahrens ist ferner darin zu sehen, dass es eine linear wachsende Komplexität aufweist, welche unabhängig von der Gesamtanzahl von verfügbaren Ressourcen ist.

Um einen Ausfall des zellularen Netzes zu vermeiden, sorgt das Verfahren dafür, dass für jede Zellengruppe die Summe der Ressourcen, die von allen Zellen, die zur jeweiligen Zellengruppe gehören, derart angepasst wird, dass sie die vorbestimmte Anzahl verfügbarer Ressourcen nicht überschreitet. In der deutschen Anmeldung DE 10 2008 006 794 A1, veröffentlicht am 20. August 2009, ist ein geeignetes Verfahren beansprucht.

Dementsprechend ist in geeigneter Weise ein Verfahren zum optimierten Zuteilen von Ressourcenanforderungen an eine Vielzahl von Zellen eines zellularen Netzes unter Berücksichtigung einer gegebenen Anzahl an verfügbaren Ressourcen vorgesehen. Jede Zelle des

Netzes fordert nunmehr eine Anzahl an Ressourcen an. Weiterhin wird eine Mehrzahl von Zellengruppen unter Verwendung eines vorbestimmten Wiederverwendungsabstandes gebildet. Der Wiederverwendungsabstand gibt den Abstand zwischen zwei Zellen innerhalb des zellularen Netzes an, in denen dieselben Ressourcen wiederverwendet werden können.

Für jede Zellengruppe wird die Gesamtanzahl an Ressourcen, die die Zellen der jeweiligen Zellengruppe angefordert haben, ermittelt. Weiterhin werden die Zellengruppen ermittelt, deren Gesamtanzahl an angeforderten Ressourcen größer ist als die gegebene Anzahl an verfügbaren Ressourcen. Unter dem Ausdruck "Gesamtanzahl an angeforderten Ressourcen einer Zellengruppe" ist die Summe der Ressourcenanforderungen aller Zellen, die zu der jeweiligen Zellengruppe gehören, zu verstehen. Für jede ermittelte Zellengruppe wird die ermittelte Gesamtanzahl angeforderter Ressourcen solange reduziert, bis die gegebene Anzahl an verfügbaren Ressourcen nicht mehr überschritten wird. Anschließend werden die Ressourcenanforderungen an die Zellen der jeweils ermittelten Zellengruppen in Abhängigkeit von der der jeweiligen Zellengruppe zugeordneten reduzierten Gesamtanzahl angeforderter Ressourcen verteilt. Auf diese Weise kann ein Netzausfall minimiert oder sogar verhindert werden. Denn das Verfahren stellt sicher, dass den Zellen einer Zellengruppe höchstens so viele Ressourcenanforderungen zugeteilt werden, wie verfügbare Ressourcen für das Netz bereitgestellt worden sind.

Die Struktur der Zellengruppen wird durch den gewählten Wiederverwendungsabstand festgelegt, welcher den Abstand zwischen zwei Zellen bestimmt, denen die gleichen Ressourcen zugewiesen werden.

Gemäß einer bevorzugten Ausführungsform ist der räumliche Abstand zwischen den Mittelpunkten jeder Zelle einer Zellengruppe kleiner als der vorbestimmte Wiederverwendungsabstand. Eine solche Zellengruppe ist dadurch gekennzeichnet, dass jede Zelle der Zellengruppe wenigstens eine direkte Nachbarzelle hat, die ebenfalls zu dieser Zellengruppe gehört. Demzufolge wird eine Zellengruppe nachfolgend auch als Nachbarschaftsgruppe bezeichnet. Der Wiederverwendungsabstand wird durch die Gleichung

$$D = \sqrt{3N} \quad R$$

definiert, wobei N die Anzahl der Zellen einer Zellengruppe und R der Zellradius ist. Zumindest einige der Zellengruppen überlappen sich teilweise. Das bedeutet, dass verschiedene Zellengruppen wenigstens eine gemeinsame Zelle enthalten. Dadurch kann in besonders effizienter Weise eine optimale Zuteilung von Ressourcenanforderungen an die Zellen erfolgen.

Ein effizientes Verfahren ergibt sich dadurch, dass wenigstens eine Zelle ermittelt wird, die in mehreren Zellengruppen enthalten ist. Nunmehr wird wenigstens die Anzahl der von der wenigstens einen Zelle angeforderten Ressourcen solange reduziert, bis die Gesamtanzahl von angeforderten Ressourcen für die jeweilige Zellengruppe die gegebene Anzahl an verfügbaren Ressourcen nicht mehr überschreitet.

Zweckmäßigerweise werden nicht nur die Zellen, die in mehreren Zellengruppen enthalten sind, sondern auch die den jeweiligen Zellen zugeordnete Anzahl von Ressourcen, welche die jeweiligen Zellen angefordert haben, ermittelt. In Abhängigkeit von der für die jeweilige Zellengruppe ermittelte Gesamtanzahl an angeforderten Ressourcen kann nunmehr geprüft werden, ob die ermittelte Gesamtanzahl an angeforderten Ressourcen lediglich durch das Reduzieren der Anzahl der von der wenigstens einen Zelle angeforderten Ressourcen erzielt werden kann, oder ob die Anzahl einer zusätzlichen, in der Zellengruppe enthaltenen Zelle ebenfalls reduziert werden muss, damit die Gesamtanzahl an angeforderten Ressourcen für die jeweilige Zellengruppe die gegebene Anzahl an verfügbaren Ressourcen nicht mehr überschreitet.

Zweckmäßigerweise werden hierbei die Zellen ermittelt, die in den meisten Zellengruppen enthalten sind.

Angemerkt sei an dieser Stelle, dass das Verfahren zum optimierten Zuteilen von Ressourcenanforderungen iterativ, rekursiv oder nicht iterativ durchgeführt werden kann.

Das oben genannte technische Problem wird ebenfalls durch ein zellulares Netz mit mehreren dezentralen Einrichtungen und einer zentralen Einrichtung gelöst, wobei die dezentralen Einrichtungen und/oder die zentrale Einrichtung zum Ausführen des Verfahrens ausgebildet sind. Diese Einrichtungen können jeweils einen Mikroprozessor aufweisen, der unter Steuerung eines in einem Speicher abgelegten Programms das beschriebene Verfahren ausführt.

Die Erfindung wird nachfolgend anhand eines Ausführungsbeispiels in Verbindung mit den beiliegenden Zeichnungen näher erläutert. Es zeigen:

Fig. 1    eine Anordnung von Nachbarzellen eines zellularen Funknetzes unter Berücksichtigung eines Wiederverwendungsabstands von 3R,

Fig. 2    eine alternative Anordnung von Nachbarzellen bei einem Wiederverwendungsabstand von 2√3R,

Fig. 3    eine Nachbarschaftsgruppe bei einem Wiederverwendungsabstand von 3R,

Fig. 4    zwei mögliche Nachbarschaftsgruppen für einen Wiederverwendungsabstand von 2√3R,

Fig. 5    einen Ausschnitt eines beispielhaften zellularen Mobilfunknetzes, wobei die in den Zellen eingetragenen Zahlen die jeweilige Anzahl angeforderter Ressourcen darstellen,

Fig. 6    den in Fig. 5 gezeigten Ausschnitt eines Mobilfunknetzes, wobei die in den Zellen eingetragenen Zahlen die Indizes der jeweiligen Wiederverwendungsgruppen darstellen,

Fig. 7    die erste Runde der Ressourcenzuweisung, in der Ressourcen einem vorbestimmten Startpunkt zugewiesen werden, wobei die Zahlenbereiche in den Zellen die zugewiesenen Ressourcen darstellen,

Fig. 8    die zweite Runde der Ressourcenzuweisung, in der Ressourcen weiteren Zellen zugewiesen werden, wobei die Zahlenbereiche in den Zellen die zugewiesenen Ressourcen darstellen,

Fig. 9    die dritte Runde der Ressourcenzuweisung,

Fig. 10   die vierte Runde der Ressourcenzuweisung,

Fig. 11   die fünfte Runde der Ressourcenzuweisung,

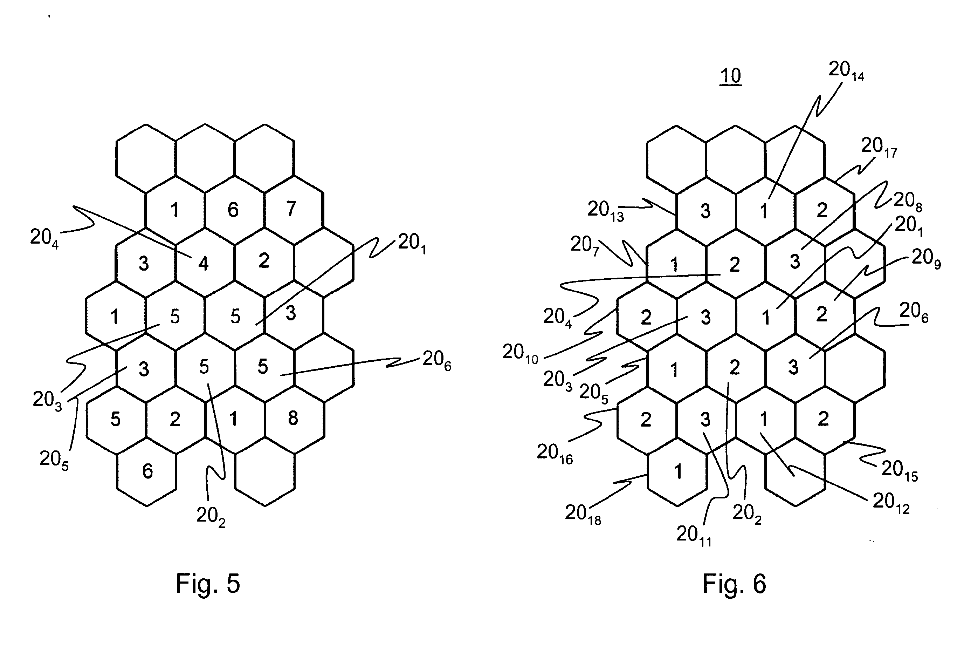

Figur 6 zeigt als zellulares Netz einen schematischen Ausschnitt eines beispielhaften zellularen Mobilfunknetzes 10, welches mehrere Zellen umfasst, wobei der einfachen Darstellung wegen nur die Zellen $20_1$ bis $20_{18}$ bezeichnet sind. Das zellulare Mobilfunknetz ist gemäß einem Wiederverwendungsabstand von 3R strukturiert worden, so dass die Zellen in drei sogenannte Wiederverwendungsgruppen 1, 2 und 3 unterteilt sind. Die in den Zellen stehenden Ziffern 1, 2 und 3 kennzeichnen den Index der jeweiligen Wiederverwendungsgruppe. Eine Wiederverwendungsgruppe umfasst somit die Zellen, denen in der Regel die gleichen Ressourcen zugeordnet werden können. Zellen mit dem gleichen Index werden auch als Gleichkanalzellen bezeichnet. Das in Fig. 6 dargestellte Mobilfunknetz enthält die Wiederverwendungsgruppe 1, die alle mit 1 gekennzeichneten Zellen umfasst. Die Wiederverwendungsgruppe 2 enthält alle mit 2 gekennzeichneten Zellen, während die Wiederverwendungsgruppe 3 alle mit 3 gekennzeichneten Zellen enthält. Weiterhin ist das in Fig. 6 gezeigte zellulare Mobilfunknetz 10 in sogenannte Nachbarschaftsgruppen unterteilt worden, wobei jede Nachbarschaftsgruppe eine Anzahl von N Zellen umfasst, deren Mittelpunkte jeweils einen räumlichen Abstand zueinander haben, der kleiner als der gewählte Wiederverwendungsabstand von 3R ist. Im vorliegenden Beispiel enthält jede Nachbarschaftsgruppe drei Nachbarzellen. Mit anderen Worten entspricht die Anzahl von Zellen einer Nachbarschaftsgruppe der Anzahl von Wiederverwendungsgruppen. Diese Beziehung steht in Zusammenhang mit dem Wiederverwendungsabstand, der durch die Gleichung

$$D = \sqrt{3N}\,R$$

definiert ist. Bei dem geschilderten Beispiel ist N = 3 und somit der Wiederverwendungsabstand gleich 3R.

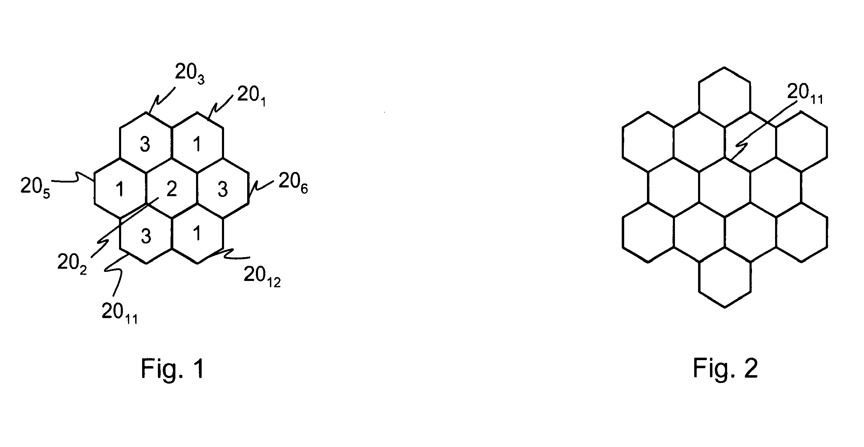

Angemerkt sei an dieser Stelle, dass zwei Zellen als Nachbarzellen bezeichnet werden, wenn ihre Mittelpunkte einen räumlichen Abstand zueinander haben, der kleiner ist als der Wiederverwendungsabstand, im vorliegenden Beispiel also kleiner ist als 3R. Die Nachbarzellen der Nachbarzelle $20_2$ sind nach dieser Definition die Nachbarzellen $20_1$, $20_3$, $20_5$, $20_6$, $20_{11}$ und $20_{12}$. Denn alle diese die Zellen weisen einen Abstand von der mittleren Nachbarschaftszelle $20_2$ auf, der kleiner ist als der Wiederverwendungsabstand 3R. Die Nachbarzellen der Nachbarzelle $20_2$ sind in Fig. 1 noch einmal gesondert dargestellt.

Fig. 1 zeigt ferner, dass die dargestellten Zellen insgesamt sechs Nachbarschaftsgruppen bilden. So bilden die Nachbarzellen $20_2$, $20_1$ und $20_6$, die Nachbarzellen $20_2$, $20_6$ und $20_{12}$, die Nachbarzellen $20_2$, $20_{12}$ und $20_{11}$, die Nachbarzellen $20_2$, $20_5$ und $20_{11}$, die Nachbarzellen $20_2$, $20_5$ und $20_3$ und die Nachbarzellen $20_2$, $20_3$ und $20_1$ jeweils eine Nachbarschaftsgruppe. Aus der in Fig. 1 gezeigten Anordnung ergibt sich ferner, dass alle Nachbarschaftsgruppen zumindest die Zelle $20_2$ gemeinsam enthalten.

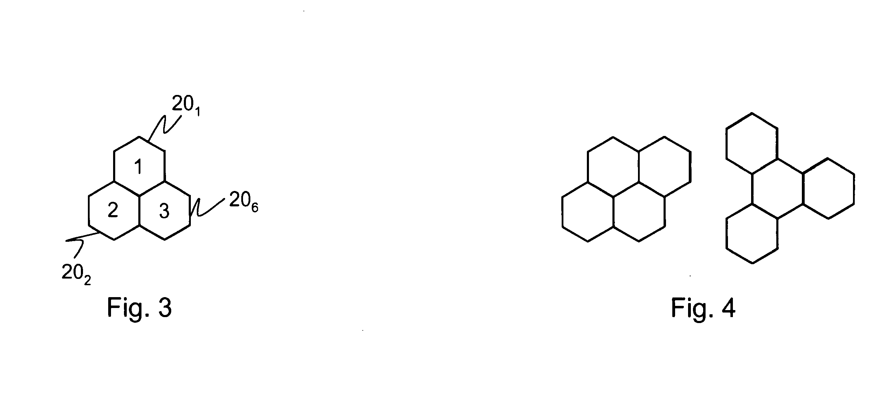

In Fig. 3 ist beispielsweise die Nachbarschaftsgruppe gesondert dargestellt, die die Nachbarschaftszellen $20_2$, $20_1$ und $20_6$ umfassen. Die in den Zellen eingetragenen Ziffern bezeichnen wiederum die jeweiligen Wiederverwendungsgruppen, zu denen die Zellen gehören. Mit anderen Worten enthält jede Nachbarschaftsgruppe jeweils eine Zelle der drei Wiederverwendungsgruppen.

Angemerkt sei, dass je nach Implementierung des Netzwerkes auch kleinere oder größere Wiederverwendungsgruppen und somit Nachbarschaftsgruppen gebildet werden können.

So zeigt Fig. 4 alternativ zwei verschiedene Nachbarschaftsgruppen mit jeweils vier Nachbarschaftszellen bei einem gewählten Wiederverwendungsabstand von $2\sqrt{3}R$. Der Abstand der benachbarten Zellen in jeder Nachbarschaftsgruppe ist kleiner als der Wiederverwendungsabstand von $2\sqrt{3}R$. Bei diesem Beispiel werden die Zellen des zellularen Mobilfunknetzes in vier Wiederverwendungsgruppen unterteilt.

Fig. 2 zeigt basierend auf den in Fig. 4 gezeigten Strukturen von Nachbarschaftsgruppen alle Nachbarzellen der Zelle $20_{11}$, welche einen Abstand zueinander aufweisen, der kleiner als der Wiederverwendungsabstand von $2\sqrt{3}R$ ist.

Die Wirkungsweise des Verfahrens wird nunmehr anhand der Fig. 5 bis 11 näher erläutert. Angenommen sei, dass das Verfahren von einer zentralen Einrichtung, zum Beispiel einer Vermittlungssteuerung (MSC), ausgeführt wird. Hierzu kann die Vermittlungssteuerung einen programmierbaren Mikroprozessor aufweisen, der unter Ansprechen auf die in einem Speicher abgelegten Programme das Verfahren ausführt. Die Vermittlungssteuerung kann weitere Speicher enthalten, in denen die Anzahl verfügbarer Ressourcen, die aktuelle Anzahl der Ressourcenanforderungen jeder Zelle, die Wiederverwendungsgruppen und die Nachbarschaftsgruppen abgelegt sind.

Die in den Zellen der Fig. 5 eingetragenen Zahlen geben die Anzahl der von der jeweiligen Zelle angeforderten Ressourcen wieder. Als Ressourcen können beispielsweise Frequenzbänder, Codes oder Zeitschlitze angefordert werden. Für das vorliegende Beispiel wird angenommen, dass den Zellen Frequenzen oder Frequenzbänder zugewiesen werden sollen.

Der programmierbare Mikroprozessor kann unter Steuerung des abgelegten Programms nunmehr eine dynamische Zuweisung der verfügbaren Ressourcen zu den Zellen des zellularen Netzes (10) in sequentieller Weise durchführen.

Angemerkt sei an dieser Stelle noch, dass die Summe der Ressourcen, die von allen Zellen einer Nachbarschaftsgruppe angefordert werden, die maximale Anzahl an verfügbaren Ressourcen, dass sind im vorliegenden Beispiel 15, nicht überschreitet. Weiterhin sei angenommen, dass den drei Wiederverwendungsgruppen beispielsweise folgende verfügbare Ressourcen zugeordnet worden sind: Der Wiederverwendungsgruppe 1 wurden die verfügbaren Ressourcen 6 bis 10 zugeordnet, der Wiederverwendungsgruppe 2 wurden die verfügbaren Ressourcen 11 bis 15 zugeordnet, und der Wiederverwendungsgruppe 3 wurden die verfügbaren Ressourcen 1 bis 5 zugeordnet.

Im ersten Schritt ermittelt der Mikroprozessor als Startpunkt eine Nachbarschaftsgruppe gemäß einer vorbestimmten Metrik. Im vorliegenden Fall bestimmt die Metrik, dass die Nachbarschaftsgruppe gesucht werden soll, deren Zellen die meisten Ressourcen angefordert haben. Im vorliegenden Beispiel findet der Mikroprozessor drei Nachbarschaftsgruppen. Denn sowohl die Nachbarschaftsgruppe, die die Zellen $20_{14}$, $20_{17}$ und $20_8$ enthält, als auch die Nachbarschaftsgruppe, die die Zellen $20_3$, $20_2$ und $20_1$ enthält, sowie die Nachbarschaftsgruppe, die die Zellen $20_2$, $20_1$ und $20_6$ enthält, haben jeweils 15 Ressourcen angefordert. Dieser Sachverhalt ist in Fig. 5 gezeigt.

Findet, wie im beschriebenen Beispiel, der Mikroprozessor mehrere Nachbarschaftsgruppen, die die Bedingung erfüllen, kann eine Nachbarschaftsgruppe zufällig ausgewählt werden. Alternativ könnte die Nachbarschaftsgruppe ausgewählt werden, bei der alle Zellen die gleiche Anzahl an Ressourcen angefordert haben. Es kann auch diejenige Nachbarschaftsgruppe ausgewählt werden, welche eine Zelle aufweist, die die meisten Ressourcen angefordert hat. Im vorliegenden Beispiel sei angenommen, dass die Nachbarschaftsgruppe, der die Zellen $20_1$, $20_2$ und $20_3$ angehören, zufällig ausgewählt worden ist. Nunmehr werden jeder Zelle dieser Nachbarschaftsgruppe die Ressourcen aus den Wiederverwendungsgruppen zugeordnet, zu der die jeweiligen Zellen gehören. Das bedeutet im Einzelnen:

Die Zelle $20_3$ gehört zur Wiederverwendungsgruppe 3. Da diese Zelle fünf Ressourcen angefordert hat, werden ihr alle verfügbaren Ressourcen der Wiederverwendungsgruppe 3, das sind die Ressourcen 1 bis 5, zugewiesen.

Die Zelle $20_1$ gehört zur Wiederverwendungsgruppe 1. Da diese Zelle ebenfalls fünf Ressourcen angefordert hat, werden ihr die Ressourcen 6 bis 10, welche der Wiederverwendungsgruppe 1 zugeordnet worden sind, zugewiesen.

Die Zelle $20_2$ gehört zur Wiederverwendungsgruppe 2. Da diese Zelle ebenfalls fünf Ressourcen angefordert hat, werden ihr alle Ressourcen 11 bis 5, die der Wiederverwendungsgruppe 2 zugeordnet worden sind, zugewiesen.

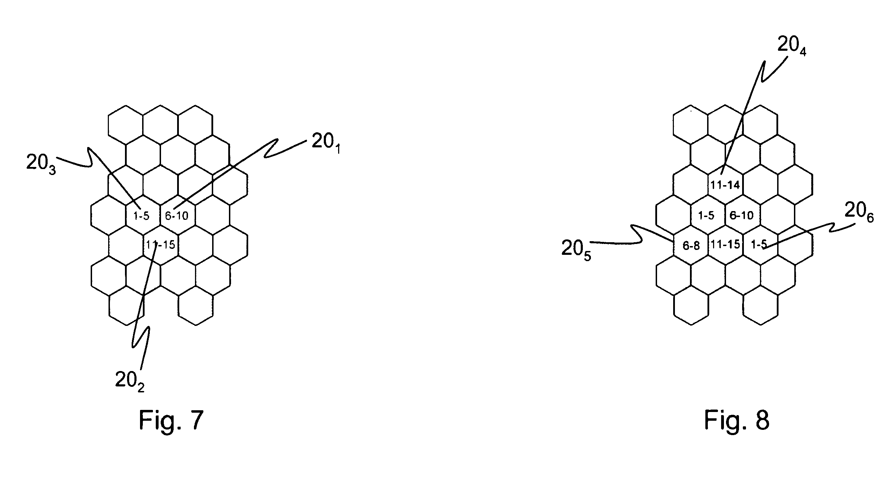

Die entsprechende Ressourcenzuweisung ist in Fig. 7 dargestellt. Angemerkt sei an dieser Stelle, dass jeder Zelle einer Nachbarschaftszelle nur Ressourcen zugewiesen werden können, welche bisher noch nicht einer Nachbarzelle zugewiesen worden sind.

Nachdem der Mikroprozessor einen Starpunkt gefunden und den dem Startpunkt zugeordneten Zellen die verfügbaren Ressourcen zugewiesen hat, wird nunmehr sequentiell, das heißt Schritt für Schritt allen übrigen Zellen des zellulären Netzes 10 Ressourcen zugewiesen.

Im zweiten Schritt werden nunmehr gemäß einer bestimmten Metrik diejenigen Zellen gesucht, die jeweils an zwei Zellen angrenzen, denen bereits Ressourcen zugewiesen worden sind. Wie in Fig. 8 dargestellt, werden im vorliegenden Beispiel die Zellen $20_4$, $20_6$ und $20_5$ ausgewählt. Denn die Zelle $20_4$ grenzt an die beiden Zellen $20_3$ und $20_1$, die Zelle $20_6$ grenzt an die beiden Zellen $20_2$ und $20_1$, während die Zelle $20_5$ an die beiden Zellen $20_3$ und $20_2$ angrenzt. Den Zellen $20_4$, $20_5$, $20_6$ werden so viele Ressourcen zugewiesen, wie sie angefordert haben. Die Zelle $20_4$ gehört zur Wiederverwendungsgruppe 2. Da diese Zelle vier Ressourcen angefordert hat, werden ihr die Ressourcen 11 bis 14 zugewiesen. Alternativ hätten dieser Zelle auch die Ressourcen 12 bis 15 der Wiederverwendungsgruppe 2 zugewiesen werden können. Die gewählte Metrik legt fest, welche Ressourcen einer Wiederverwendungsgruppe ausgewählt werden. Beim beschriebenen Beispiel werden die Ressourcen in einer Reihenfolge beginnend mit dem kleinsten Index ausgewählt. In ähnlicher Weise werden der Zelle $20_6$ die der Wiederverwendungsgruppe 3 zugeordneten Ressourcen 1 bis 5 zugewiesen, da die Zelle $20_6$ fünf Ressourcen angefordert hat. Der Zelle $20_5$ werden lediglich drei Ressourcen 6 bis 8 der Wiederverwendungsgruppe 1 zugewiesen. Die entsprechende Ressourcenzuweisung ist in Fig. 8 näher dargestellt.

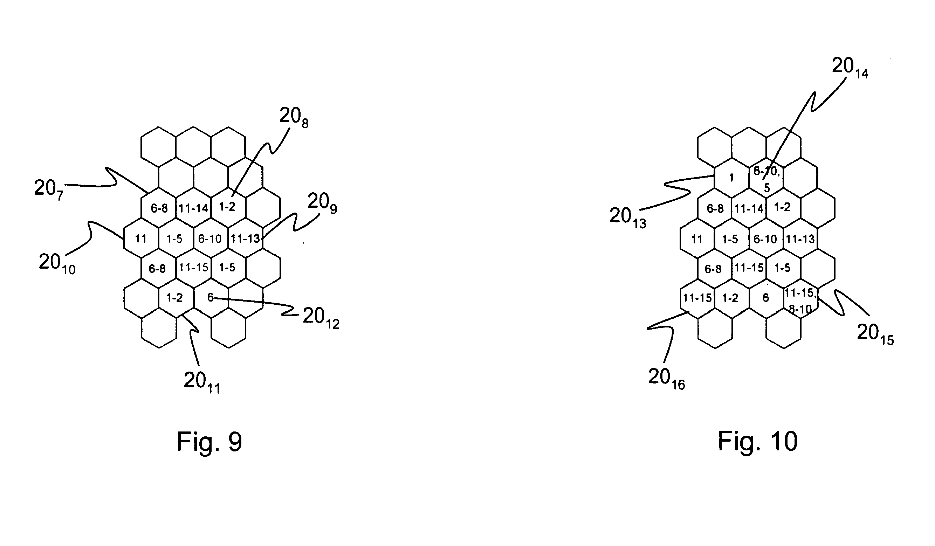

Im dritten Schritt wählt der Mikroprozessor wiederum Zellen aus, die unmittelbar an zwei benachbarte Zellen angrenzen, denen bereits Ressourcen zugewiesen worden sind. Wie Fig. 9 zeigt, wählt der Mikroprozessor die Zellen $20_7$, $20_8$, $20_9$, $20_{12}$, $20_{11}$ und $20_{10}$, aus. Da jede ausgewählte Zellen nicht mehr Ressourcen angefordert hat, als den jeweiligen Wiederverwendungsgruppen zugewiesen worden ist, folgt eine Zuweisung von Ressourcen in der hinsichtlich des zweiten Schritts beschriebenen Weise. Die genaue Zuweisung der Ressourcen ist in Fig. 9 dargestellt. Wiederum legt die Metrik fest, dass die Ressourcen mit dem kleinsten oder größten Index, zuerst zugewiesen werden, sofern die Anzahl angeforderter Ressourcen kleiner ist als die Anzahl der der Wiederverwendungsgruppe zugeordneten Ressourcen, zu welcher die jeweilige Zelle gehört.

Im vierten Schritt wählt der Mikroprozessor wiederum die Zellen aus, welche jeweils unmittelbar an zwei Zellen angrenzen, denen bereits Ressourcen in einem der vorherigen Schritte zugewiesen worden sind. Im vorliegenden Beispiel findet der Mikroprozessor unter Anderem die Zellen $20_{13}$, $20_{14}$, $20_{15}$ und $20_{16}$, wie in Fig. 10 gezeigt ist. Die Zuordnung von Ressourcen zu den Zellen $20_{13}$ und $20_{16}$ erfolgt in der zuvor beschriebenen Weise. Hinsichtlich der Zellen $20_{14}$ und $20_{15}$ tritt nun ein neuer Fall auf, da diese Zellen mehr Ressourcen angefordert haben, als den jeweiligen Wiederverwendungsgruppen zugewiesen worden sind. Wie in Fig. 5 in Verbindung mit Fig. 6 zu sehen, hat die Zelle $20_{14}$ sechs Ressourcen angefordert. Eine beispielhafte Zuweisungsmetrik legt fest, dass zunächst die Ressourcen der Zelle $20_{14}$ zugewiesen werden, die der Wiederverwendungsgruppe zugeordnet worden sind, zu der die Zelle $20_{14}$ gehört. Im vorliegenden Beispiel gehört die Zelle $20_{14}$ zur Wiederverwendungsgruppe 1. Demzufolge werden der Zelle $20_{14}$ zunächst die Ressourcen 6 bis 10 zugeordnet. Da der Zelle $20_{14}$ noch eine weitere Ressource zugewiesen werden soll, wird eine weitere Metrik angewandt, die das Auswählen einer weiteren verfügbaren Ressource festlegt. Im vorliegenden Beispiel sucht der vom Mikroprozessor ausgeführte Algorithmus die an die Zelle $20_{14}$ angrenzenden Zellen, denen bereits Ressourcen zugewiesen worden. Anschließend wird geprüft, wie viele und welche Ressourcen den jeweiligen Zellen zugewiesen worden sind. Im vorliegenden Beispiel erkennt der Mikroprozessor, dass der benachbarten Zelle $20_{13}$ eine Ressource aus der Wiederverwendungsgruppe 3 zugewiesen worden ist, der benachbarten Zelle $20_8$ zwei Ressourcen aus der Wiederverwendungsgruppe 3 und der benachbarten Zelle $20_4$ vier Ressourcen aus der Wiederverwendungsgruppe 2 zugewiesen worden sind. Die beispielhafte Metrik kann weiter bestimmen, dass nunmehr eine verfügbare Ressource aus der Wiederverwendungsgruppe ausgewählt wird, aus der die wenigsten verfügbaren Ressourcen an die Nachbarzellen vergeben worden sind. Weiterhin kann die Metrik bestimmen, dass in diesem Fall die verfügbare Ressource mit dem höchsten Index ausgewählt wird. Gemäß dieser Metrik wird der Zelle $20_{14}$ die verfügbare Ressource 5 aus der Wiederverwendungsgruppe 3 zugeordnet. Eine alternative Metrik hätte auch die Ressource 15 aus der Wiederverwendungsgruppe 2 auswählen können.

In ähnlicher Weise sucht der Mikroprozessor für die Zelle $20_{15}$ weitere verfügbare Ressourcen aus. Da die Zelle $20_{15}$ acht Ressourcen verlangt hat, werden ihr zunächst die fünf Ressourcen 11 bis 15 der Wiederverwendungsgruppe 2 zugewiesen, zu der die Zelle $20_{15}$ gehört. Anschließend werden entsprechend der zuvor beschriebenen Metrik die verfügbare Ressourcen 8 bis 10 aus der Wiederverwendungsgruppe 1 ausgewählt. Denn die Ressourcen der Wiederverwendungsgruppe 3 wurden allesamt bereits der Zelle $20_6$ zugewiesen.

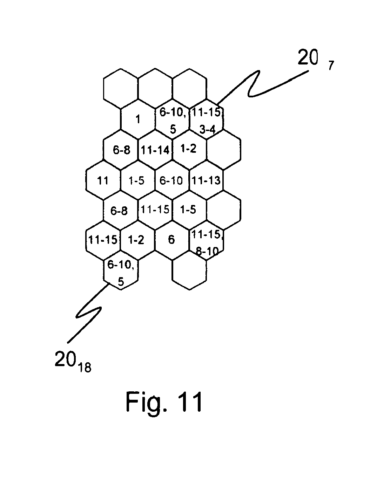

Fig. 11 zeigt einen weiteren Zuweisungsschritt, bei dem wiederum der Mikroprozessor die Zellen auswählt, die jeweils unmittelbar an zwei Zellen angrenzen, denen bereits Ressourcen zugewiesen worden sind. Für den in Fig. 11 dargestellten Netzausschnitt werden nunmehr den Zellen $20_{17}$ und $20_{18}$ Ressourcen zugewiesen. Da die Zelle $20_{17}$ sieben Ressourcen angefordert hat, müssen ihr neben den fünf Ressourcen der Wiederverwendungsgruppe 2, zu welcher die Zelle $20_{17}$ gehört, noch zwei weitere Ressourcen zugewiesen werden. Hierbei muss darauf geachtet werden, dass die zusätzlich angeforderten Ressourcen so ausgewählt, dass allen Zellen der Nachbarschaftsgruppe, welche die Zellen $20_{17}$, $20_{14}$ und $20_8$ umfasst, verschiedene Ressourcen zugewiesen werden. Hierzu ermittelt der Mikroprozessor zunächst die den Nachbarzellen $20_{14}$ und $20_8$ zugewiesenen Ressourcen. Dabei erkennt der Mikroprozessor, dass der Nachbarzelle $20_{14}$ bereits alle Ressourcen der Wiederverwendungsgruppe 1 und darüber hinaus die Ressource 5 der Wiederverwendungsgruppe 3 zugewiesen worden sind. Der Nachbarzelle $20_8$ sind die Res-

sourcen 1 bis 2 der Wiederverwendungsgruppe 3 zugewiesen worden. Demzufolge sind nur noch die Ressourcen 3 und 4 der Wiederverwendungsgruppe 3 verfügbar, welche der Zelle $20_{17}$ zugewiesen werden können. In ähnlicher Weise werden die sechs Ressourcenanforderungen der Zelle $20_{18}$ befriedigt. Die Zelle $20_{18}$ selbst ist der Wiederverwendungsgruppe 1 zugeordnet. Demzufolge werden der Zelle $20_{18}$ die Ressourcen 6 bis 10 aus der Wiederverwendungsgruppe 1 zugewiesen. Anhand der bisherigen Ressourcenzuweisung erkennt der Mikroprozessor, dass lediglich die Ressourcen 3 bis 5 noch verfügbar sind. Wie bereits zuvor beschrieben, kann eine Metrik gewählt werden, bei der die Ressourcen in einer Reihenfolge beginnend mit dem höchsten Index, welcher der höchsten Frequenz entsprechen kann, ausgewählt werden. Demzufolge wird die Ressource 5 aus der Wiederverwendungsgruppe 3 ausgewählt und der Zelle $20_{18}$ zugewiesen.

Dieses Verfahren wird so lang wiederholt, bis allen Zellen des zellularen Netzes 10 die gewünschten Ressourcen zugewiesen worden sind.

Für den Fachmann ist offensichtlich, dass auch andere Metriken angewendet werden können, die zur Auswahl des Startpunktes, zur sequentiellen Auswahl von Zellen oder Gruppen von Zellen, zur Festlegung der Reihenfolge der Zuweisung von Ressourcen und zur Auswahl der Ressourcen aus verschiedenen Wiederverwendungsgruppen dienen. Für den Fachmann ist es ebenfalls offensichtlich, dass die Zellen des zellularen Netzes 10 in Wiederverwendungsgruppen und Nachbarschaftsgruppen unter Berücksichtigung von Wiederverwendungsabständen unterteilt werden können, die größer oder kleiner als 3R sind. Für einen Wiederverwendungsabstand von $2\sqrt{3}R$ ergeben sich die in Fig. 4 gezeigten Nachbarschaftsgruppen.

Dank der Verwendung einer sequentiellen und dynamischen Zuweisung von Ressourcen können den Zellen in Echtzeit andere Ressourcen zugewiesen werden, wenn sich die aktuelle Anzahl angeforderter Ressourcen ändert.

**Patentansprüche**

1. Verfahren zum dynamischen Zuweisen von Ressourcen aus einer vorbestimmten Anzahl verfügbarer Ressourcen an mehrere Zellen eines zellularen Netzes (10), mit folgenden Schritten:

   a) Unterteilen des Netzes in mehrere Zellengruppen unter Berücksichtigung eines vorbestimmten Wiederverwendungsabstands, wobei die Zellen jeder Zellengruppe einen Abstand zueinander aufweisen, der kleiner als der vorbestimmte Wiederverwendungsabstand ist, und wobei sich die Zellengruppen teilweise überlappen;
   b) Ermitteln, für jede Zelle, der aktuellen Anzahl von angeforderten Ressourcen;
   c) Auswählen wenigstens einer ersten Zelle ($20_1$, $20_2$, $20_3$) gemäß einer ersten Metrik;
   d) Zuweisen von Ressourcen der wenigstens einen ersten Zelle entsprechend der Anzahl von Ressourcen, die die jeweilige erste Zelle angefordert hat, wobei die der jeweiligen ersten Zelle zuzuweisenden Ressourcen gemäß einer zweiten Metrik aus der vorbestimmten Anzahl an verfügbaren Ressourcen ausgewählt werden;
   e) Auswählen wenigstens einer weiteren Zelle ($20_4$, $20_5$, $20_6$) gemäß einer dritten Metrik;
   f) Zuweisen von Ressourcen zu der wenigstens einen weiteren Zelle entsprechend der Anzahl von Ressourcen, die die jeweilige weitere Zelle angefordert hat, wobei die der jeweiligen weiteren Zelle zuzuweisenden Ressourcen gemäß der zweiten Metrik aus der vorbestimmten Anzahl an verfügbaren Ressourcen ausgewählt werden;
   g) Wiederholen der Schritte e) und f) solange, bis allen Zellen des zellularen Netzes Ressourcen entsprechend der Anzahl von Ressourcen, die die jeweiligen weiteren Zellen angefordert haben, zugewiesen worden sind, wobei die Ressourcen derart zugewiesen werden, dass den Zellen jeder Zellengruppe verschiedene Ressourcen zugewiesen werden.

2. Verfahren nach Anspruch 1,
   **dadurch gekennzeichnet, dass**
   in Schritt c) die erste Metrik bestimmt, dass die wenigstens eine erste Zelle, welche die meisten oder wenigstens Ressourcen angefordert hat, ausgewählt wird.

3. Verfahren nach Anspruch 1,
   **dadurch gekennzeichnet, dass**
   in Schritt c) die erste Metrik bestimmt, dass die wenigstens eine erste Zelle zufällig ausgewählt wird.

4. Verfahren nach einem der Ansprüche 1 bis 3,
   **dadurch gekennzeichnet, dass**
   in Schritt e) die dritte Metrik bestimmt, dass die wenigstens eine weitere Zelle zufällig ausgewählt wird.

5. Verfahren nach einem der Ansprüche 1 bis 4,
   **dadurch gekennzeichnet, dass**
   in Schritt e) die dritte Metrik bestimmt, dass die wenigstens eine weitere Zelle ausgewählt wird, die die meisten oder wenigsten Ressourcen angefordert hat.

6. Verfahren nach einem der Ansprüche 1 bis 5,
   **dadurch gekennzeichnet, dass**
   in Schritt e) die dritte Metrik bestimmt, dass die wenigstens eine weitere Zelle ausgewählt wird, die zu einer Zellengruppe gehört, deren Zellen die meisten oder wenigsten Ressourcen angefordert haben.

**7.** Verfahren nach einem der Ansprüche 1 bis 6, **dadurch gekennzeichnet, dass**, in Schritt e) die dritte Metrik bestimmt, dass wenigstens eine weitere Zelle ausgewählt wird, die an wenigstens eine Zelle angrenzt, der bereits Ressourcen zugeordnet worden sind.

**8.** Verfahren nach einem der Ansprüche 1 bis 7, **dadurch gekennzeichnet, dass** in Schritt c) die erste Metrik bestimmt, dass die ersten Zellen ausgewählt werden, welche eine Zellengruppe bilden.

**9.** Verfahren nach Anspruch 8, **dadurch gekennzeichnet, dass** in Schritt c) die erste Metrik bestimmt, dass die ausgewählten ersten Zellen die meisten oder wenigsten Ressourcen angefordert haben.

**10.** Verfahren nach Anspruch 8, **dadurch gekennzeichnet, dass** in Schritt c) die erste Metrik bestimmt, dass alle ersten Zellen ausgewählt werden, die jeweils die gleiche oder unterschiedliche Anzahl an Ressourcen angefordert haben.

**11.** Verfahren nach einem der Ansprüche 8 bis 11, **dadurch gekennzeichnet, dass**

der Wiederverwendungsabstand $\sqrt{3N}$ R beträgt, wobei R der Radius einer Zelle ist und N die Anzahl an Zellen einer Zellengruppe ist; die Zellen des zellularen Netzes entsprechend dem vorbestimmten Wiederverwendungsabstand in N Wiederverwendungsgruppen aufgeteilt sind; jeder Wiederverwendungsgruppe eine vorbestimmte Anzahl an Ressourcen zugeordnet werden, wobei die Summe der den Wiederverwendungsgruppen zugeordneten Ressourcen die Anzahl verfügbarer Ressourcen nicht überschreitet; jede Zelle einer Zellengruppe zu einer anderen Wiederverwendungsgruppe gehört; dass in Schritt c) die ausgewählten ersten Zellen zu einer Zellengruppe gehören; in Schritt d) jeder ersten Zelle der Zellengruppe so viele Ressourcen zugewiesen werden, wie die jeweilige erste Zelle angefordert hat, wobei jeder ersten Zelle unterschiedliche Ressourcen zugewiesen werden; in Schritt e) wenigstens eine weitere Zelle ausgewählt wird, die jeweils an wenigstens eine Zelle angrenzt, welcher bereits Ressourcen zugewiesen worden sind; in Schritt f) die wenigstens eine Zellengruppen ermittelt wird, zu der die wenigstens eine weitere Zelle gehört, und dass jeder weiteren Zelle so viele Ressourcen zugewiesen werden, wie die jeweilige weitere Zelle angefordert hat, wobei jeder weiteren Zelle andere Ressourcen als den übrigen Zellen der jeweiligen Zellengruppe zugewiesen werden; in Schritt g) die Schritte e) und f) wiederholt werden, bis allen Zellen des zellularen Netzes Ressourcen zugewiesen worden sind.

**12.** Verfahren nach Anspruch 11, **dadurch gekennzeichnet, dass** in Schritt d) jeder ersten Zelle zuerst die Ressourcen zugewiesen werden, die der Wiederverwendungsgruppe, zu welcher die jeweilige erste Zelle gehört, zugeordnet sind, und, wenn weitere Ressourcen einer oder mehreren ersten Zellen zugewiesen werden sollen, die weiteren Ressourcen gemäß einer vierten Metrik aus wenigstens einer der anderen Wiederverwendungsgruppen ausgewählt werden, und dass in Schritt f) jeder weiteren Zelle zuerst die Ressourcen zugewiesen werden, die der Wiederverwendungsgruppe, zu welcher die jeweilige weitere Zelle gehört, zugeordnet sind, und, wenn weitere Ressourcen einer oder mehreren weiteren Zellen zugewiesen werden sollen, die Ressourcen gemäß der vierten Metrik aus wenigstens einer der anderen Wiederverwendungsgruppen ausgewählt werden.

**13.** Verfahren nach Anspruch 11 oder 12, **dadurch gekennzeichnet, dass** der Wiederverwendungsabstand 3R beträgt, die Zellen des zellularen Netzes in drei Wiederverwendungsgruppen aufgeteilt sind, und in Schritt e) wenigstens eine weitere Zelle ausgewählt wird, die jeweils an zwei Zellen angrenzt, welchen bereits Ressourcen zugewiesen worden sind.

**14.** Verfahren nach einem der Ansprüche 1 bis 13, **dadurch gekennzeichnet, dass** für jede Zellengruppe die Summe der Ressourcen, die von allen Zellen, die zur jeweiligen Zellengruppe gehören, derart angepasst wird, dass sie die vorbestimmte Anzahl verfügbarer Ressourcen nicht überschreitet.

**15.** Verfahren nach Anspruch 11, **dadurch gekennzeichnet, dass** in Schritt c) die ersten Zellen einer Zellengruppe ausgewählt werden, die jeweils eine Anzahl von Ressourcen angefordert haben, die nicht größer ist als die Anzahl an Ressourcen, welche der Wiederverwendungsgruppe, zu der die jeweilige erste Zelle gehört, zugeordnet worden ist.

**16.** Verfahren nach Anspruch 11 oder 15, **dadurch gekennzeichnet, dass** in Schritt c) die ersten Zellen ausgewählt werden, welche die meisten oder wenigstens Ressourcen angefordert haben.

**17.** Verfahren nach einem der vorhergehenden Ansprüche, **dadurch gekennzeichnet, dass** für jede Zelle die aktuelle Anzahl angeforderter Ressourcen regelmäßig ermittelt wird, wobei Schritt c) erneut ausgeführt werden kann, bevor Schritt g) beendet worden ist.

**18.** Zellulares Netz (10) mit mehreren dezentralen Einrichtungen, wobei die dezentralen Einrichtungen und/oder eine zentrale Einrichtung zum Ausführen des Verfahrens nach einem der Ansprüche 1 bis 17 ausgebildet sind.

**Claims**

**1.** A method for the dynamic allocation of resources from a predetermined number of available resources to a plurality of cells in a cellular network (10), the method comprising the following steps:

a) dividing the network in a plurality of cell groups taking into account a predetermined reuse distance, wherein the cells of each cell group have a distance from one another that is smaller than the predetermined reuse distance, and wherein the cell groups partly overlap;
b) determining, for each cell, the current number of requested resources;
c) selecting at least a first cell $(20_1, 20_2, 20_3)$ according to a first metric;
d) allocating resources to the at least one first cell according to the number of resources that have been requested by the respective first cell, wherein the resources to be allocated to the respective first cell are selected from the predetermined number of available resources according to a second metric;
e) selecting at least one additional cell $(20_4, 20_5, 20_6)$ according to a third metric;
f) allocating resources to the at least one additional cell according to the number of resources that have been requested by the respective additional cell, wherein the resources to be allocated to the respective additional cell are selected from the predetermined number of available resources according to the second metric;
g) repeating the steps e) and f) until resources have been allocated to all cells of the cellular network according to the number of resources that have been requested by the respective additional cells, wherein the resources are allocated in a way that different resources are allocated to the cells of each cell group.

**2.** The method according to claim 1, **characterised in that** in step c) the first metric determines that the at least one first cell that has requested the most or the fewest resources is selected.

**3.** The method according to claim 1, **characterised in that** in step c) the first metric determines that the at least one first cell is selected randomly.

**4.** The method according to any one of claims 1 to 3, **characterised in that** in step e) the third metric determines that the at least one additional cell is selected randomly.

**5.** The method according to any one of claims 1 to 4, **characterised in that** in step e) the third metric determines that the at least one additional cell that has requested the most or the fewest resources is selected.

**6.** The method according to any one of claims I to 5, **characterised in that** in step e) the third metric determines that the at least one additional cell is selected that belongs to a cell group the cells of which have requested the most or the fewest resources.

**7.** The method according to any one of claims 1 to 6, **characterised in that** in step e) the third metric determines that at least one additional cell is selected that is adjacent to at least one cell to which resources have already been assigned.

**8.** The method according to any one of claims 1 to 7, **characterised in that** in step c) the first metric determines that the first cells are selected that form a cell group.

**9.** The method according to claim 8, **characterised in that** in step c) the first metric determines that the selected first cells have requested the most or the fewest resources.

**10.** The method according to claim 8, **characterised in that** in step c) the first metric determines that all first cells are selected which respectively have requested the same or a different number of resources.

**11.** The method according to any one of claims 8 to 11, **characterised in that** the reuse distance is $\sqrt{3N}\,R$, wherein R is the radius of a cell and N is the number of cells of a cell group; the cells of the cellular network are divided in N reuse groups according to the predetermined reuse distance; a predetermined number of resources is assigned to each reuse group, wherein the sum of the resources assigned to the reuse groups does not exceed the number of available resources;

each cell of a cell group belongs to a different reuse group;
that
in step c) the selected first cells belong to a cell group;
in step d) each first cell of the cell group is allocated as many resources as the respective cell has requested, wherein different resources are allocated to each first cell;
in step e) at least one additional cell is selected which is respectively adjacent to at least one cell to which resources have already been allocated;
in step f) the at least one cell group is determined to which the at least one additional cell belongs, and that as many resources are allocated to each additional cell as have been requested by the respective additional cell, wherein each additional cell is allocated different resources than the remaining cells of the respective cell group;
in step g) the steps e) and f) are repeated until resources have been allocated to all cells of the cellular network.

12. The method according to claim 11, **characterised in that** in step d) to each first cell those resources are first allocated that are assigned to the reuse group to which the respective first cell belongs, and, if additional resources are to be allocated to one or more first cells, the additional resources are selected from at least one of the other reuse groups according to a fourth metric, and that
in step f) to each additional cell those resources are first allocated that are assigned to the reuse group to which the respective additional cell belongs, and, if additional resources are to be allocated to one or more additional cells, the resources are selected from at least one of the other reuse groups according to a fourth metric.

13. The method according to claim 11 or 12, **characterised in that** the reuse distance is 3R, that the cells of the cellular network are divided in three reuse groups, and that in step e) at least one additional cell is selected that is respectively adjacent to two cells to which resources have already been allocated.

14. The method according to any one of claims 1 to 13, **characterised in that** for each cell group the sum of resources of all cells belonging to the respective cell group is adapted in a way that it does not exceed the predetermined number of available resources.

15. The method according to claim 11, **characterised in that** in step c) the first cells of a cell group are selected that respectively have requested a number of resources that is not larger than the number of resources assigned to the reuse group to which the respective first cell belongs,

16. The method according to claim 11 or 15, **characterised in that** in step c) the first cells are selected which have requested the most or the fewest resources.

17. The method according to any one of the preceding claims, **characterised in that** for each cell the current number of requested resources is regularly determined, wherein step c) can be carried out again before step g) has been completed.

18. A cellular network (10) having
a plurality of decentralised devices, wherein the decentralised devices and/or a central device is configured to carry out the method according to any one of claims 1 to 17.

**Revendications**

1. Procédé d'affectation dynamique de ressources à plusieurs cellules d'un réseau cellulaire (10) à partir d'un nombre prédéterminé de ressources disponibles, comprenant les étapes suivantes :

a) division du réseau en plusieurs groupes de cellules en tenant compte d'une distance de réutilisation prédéterminée, les cellules de chaque groupe de cellules présentant une distance les unes par rapport aux autres qui est plus petite que la distance de réutilisation prédéterminée et les groupes de cellules se chevauchant partiellement ;
b) détermination, pour chaque cellule, du nombre actuel de ressources requises ;
c) sélection d'au moins une première cellule $(20_1, 20_2, 20_3)$ selon une première métrique ;
d) affectation de ressources à la au moins une première cellule selon le nombre de ressources requises par la première cellule respective, les ressources à affecter à la première cellule respective étant sélectionnée selon une deuxième métrique à partir du nombre prédéterminé de ressources disponibles ;
e) sélection d'au moins une autre cellule $(20_4, 20_5, 20_6)$ selon une troisième métrique ;
f) affectation de ressources à la au moins une autre cellule selon le nombre de ressources requises par l'autre cellule respective, les ressources à affecter à l'autre cellule étant sélectionnées selon la deuxième métrique parmi le nombre prédéterminé de ressources disponibles ;
g) répétition des étapes e) et f) jusqu'à ce que des ressources aient été affectées à toutes les cellules du réseau cellulaire selon le nombre de ressources requises par les autres cellules respectives, les ressources étant affectées de manière à affecter des ressources différentes aux cellules de chaque groupe de cellules.

**2.** Procédé selon la revendication 1, **caractérisé en ce qu'**à l'étape c), la première métrique détermine que la au moins une première cellule qui a requis le plus ou le moins de ressources, est sélectionnée.

**3.** Procédé selon la revendication 1, **caractérisé en ce qu'**à l'étape c), la première métrique détermine que la au moins une première cellule est sélectionnée de manière aléatoire.

**4.** Procédé selon l'une des revendications 1 à 3, **caractérisé en ce qu'**à l'étape e), la troisième métrique détermine que la au moins une autre cellule est sélectionnée de manière aléatoire.

**5.** Procédé selon l'une des revendications 1 à 4, **caractérisé en ce qu'**à l'étape e), la troisième métrique détermine que la au moins une autre cellule qui a requis le plus ou le moins de ressources est sélectionnée.

**6.** Procédé selon l'une des revendications 1 à 5, **caractérisé en ce qu'**à l'étape e), la troisième métrique détermine, que la au moins une autre cellule appartenant à un groupe de cellules dont les cellules ont requis le plus ou le moins de ressources est sélectionnée.

**7.** Procédé selon l'une des revendications 1 à 6, **caractérisé en ce qu'**à l'étape e), la troisième métrique détermine qu'au moins une autre cellule adjacente à au moins une cellule à laquelle sont déjà affectées des ressources est sélectionnée.

**8.** Procédé selon l'une des revendications 1 à 7, **caractérisé en ce qu'**à l'étape c), la première métrique détermine que les premières cellules formant un groupe de cellules sont sélectionnées.

**9.** Procédé selon la revendication 8, **caractérisé en ce qu'**à l'étape c), la première métrique détermine que les premières cellules sélectionnées ont requis le plus ou le moins de ressources.

**10.** Procédé selon la revendication 8, **caractérisé en ce qu'**à l'étape c), la première métrique détermine que toutes les premières cellules ayant chacune requis le même nombre ou un nombre différent de ressources sont sélectionnées.

**11.** Procédé selon l'une des revendications 8 à 11, **caractérisé en ce que** la distance de réutilisation est de $\sqrt{3N}R$, R étant le rayon d'une cellule et N le nombre de cellules d'un groupe de cellules ; les cellules du réseau cellulaires étant réparties en N groupes de réutilisation selon la distance de réutilisation prédéterminée ; un nombre prédéterminé de ressources étant affecté à chaque groupe de réutilisation, la somme des ressources affectées aux groupes de réutilisation ne dépassant pas le nombre de ressources disponibles ; chaque cellule d'un groupe de cellules appartenant à un autre groupe de réutilisation ; **en ce qu'**à l'étape c), les premières cellules sélectionnées appartiennent à un groupe de cellules ; **en ce qu'**à l'étape d), autant de ressources que requises par la première cellule respective sont affectées à chaque première cellule du groupe de cellules, des ressources différentes étant affectées à chaque première cellule ; **en ce qu'**à l'étape e), au moins une autre cellule est sélectionnée qui est adjacente à au moins une cellule à laquelle ont déjà été affectées des ressources ; **en ce qu'**à l'étape f), le au moins un groupe de cellules auquel appartient la au moins une autre cellule est déterminé, et **en ce que** autant de ressources sont affectées à chaque autre cellule que l'autre cellule respective a requises, d'autres ressources que celles affectées aux cellules restantes du groupe de cellules respectif étant affectées à chaque autre cellule ; **en ce qu'**à l'étape g), les étapes e) et f) sont répétées jusqu'à ce que des ressources aient été affectées à toutes les cellules du réseau cellulaire.

**12.** Procédé selon la revendication 11, **caractérisé en ce qu'**à l'étape d), les ressources affectées au groupe de réutilisation auquel appartient la première cellule respective sont affectées d'abord à chaque première cellule et, si d'autres ressources doivent être affectées à une ou plusieurs premières cellules, les autres ressources seront sélectionnées selon une quatrième métrique parmi au moins un des autres groupes de réutilisation, et **en ce qu'**à l'étape f), les ressources affectées au groupe de réutilisation auquel appartient l'autre cellule respective sont affectées d'abord à chaque autre cellule, et si d'autres ressources doivent être affectées à une ou plusieurs autres cellules, les ressources seront sélectionnées parmi au moins un des autres groupes de réutilisation selon la quatrième métrique.

**13.** Procédé selon l'une des revendications 11 ou 12, **caractérisé en ce que** la distance de réutilisation est de 3R, **en ce que** les cellules du réseau cellulaires sont divisées en trois groupes de réutilisation, et **en ce qu'**à l'étape e) au moins une autre cellule est sélectionnée qui est respectivement adjacente à deux cellules auxquelles des ressources ont déjà été affectées.

**14.** Procédé selon l'une des revendications 1 à 13, **caractérisé en ce que**, pour chaque groupe de cellules, la somme des ressources de toutes les cellules appartenant au groupe de cellules respectif est adapté de manière à ne pas dépasser le nombre prédéterminé de ressources disponibles.

**15.** Procédé selon la revendication 11, **caractérisé en ce qu'**à l'étape c), les premières cellules d'un groupe de cellules sont sélectionnées qui ont chacune requis un nombre de ressources qui n'est pas plus grand que le nombre de ressources qui a été affecté au groupe de réutilisation auquel appartient la première cellule respective.

**16.** Procédé selon l'une des revendications 11 ou 15, **caractérisé en ce qu'**à l'étape c), les premières cellules qui ont requis le plus ou le moins de ressources sont sélectionnées.

**17.** Procédé selon l'une des revendications précédentes, **caractérisé en ce que**, pour chaque cellule, le nombre actuel de ressources requises est déterminé régulièrement, l'étape c) pouvant être répétée avant que l'étape g) ait été achevée.

**18.** Réseau cellulaire (10) comportant plusieurs dispositifs décentralisés, les dispositifs décentralisés et/ou un dispositif central étant conçus pour réaliser le procédé selon l'une des revendications 1 à 17.

Fig. 2

Fig. 1

Fig. 4

Fig. 3

Fig. 6

Fig. 5

16

Fig. 7

Fig. 8

Fig. 10

Fig. 9

EP 2 086 257 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0059251 A1
- US 6002934 A
- DE 102008006794 A1

**In der Beschreibung aufgeführte Nicht-Patentliteratur**

- **K. DAVID et al.** Digitale Mobilfunksysteme. B.G. Teubner, 1996, 94-100
- **I. KATZELA et al.** Channel Assignement Schemes for Cellular Mobile Telecommunication Systems: A Comprehensive Survey. *IEEE Personal Communications,* Juni 1996, vol. 3, 10-31